# EUROPÄISCHE PATENTSCHRIFT

(11) **EP 3 175 694 B1**
(45) Veröffentlichungstag und Bekanntmachung des Hinweises auf die Patenterteilung: **11.01.2023**
(21) Anmeldenummer: 16401091.0
(22) Anmeldetag: 25.11.2016
(51) Int. Cl.: A01B 79/00, A01C 21/00

(54) **VERFAHREN ZUM VERTEILEN LANDWIRTSCHAFTLICHEN VERTEILGUTS, STEUERUNG FÜR EINE VERTEILMASCHINE FÜR LANDWIRTSCHAFTLICHES VERTEILGUT, UND VERTEILMASCHINE FÜR LANDWIRTSCHAFTLICHES VERTEILGUT**
METHOD FOR DISTRIBUTION OF AGRICULTURAL DISTRIBUTED MATERIAL, CONTROL FOR A SPREADER FOR AGRICULTURAL DISTRIBUTED MATERIAL, AND DISTRIBUTOR FOR AGRICULTURAL DISTRIBUTED MATERIAL
PROCÉDÉ D'ÉPANDAGE DE PRODUIT D'ÉPANDAGE AGRICOLE, COMMANDE POUR UNE ÉPANDEUSE POUR PRODUIT D'ÉPANDAGE AGRICOLE, ET ÉPANDEUSE POUR PRODUIT D'ÉPANDAGE AGRICOLE

(30) Priorität: 02.12.2015 DE 102015120869
(43) Veröffentlichungstag der Anmeldung: 07.06.2017
(73) Patentinhaber: Amazonen-Werke H. Dreyer SE & Co. KG, 49205 Hasbergen (DE)
(72) Erfinder: Heer, Jochen, 49074 Osnabrück (DE); Kühn, Christoph, 49080 Osnabrück (DE); Sia, Tim-Randy, 49179 Ostercappeln (DE)

(56) Entgegenhaltungen:
- EP-A2- 1 183 929
- WO-A1-2008/086318
- US-A- 4 392 611
- US-A1- 2006 265 106
- US-B2- 8 373 552

## Beschreibung

Die Erfindung betrifft ein Verfahren zum Verteilen landwirtschaftlichen Verteilguts gemäß dem Oberbegriff des Anspruchs 1. Des Weiteren betrifft die Erfindung eine Steuerung für eine Verteilmaschine für landwirtschaftliches Verteilgut gemäß dem Oberbegriff des Anspruchs 12. Schließlich betrifft die Erfindung eine Verteilmaschine für landwirtschaftliches Verteilgut gemäß dem Oberbegriff des Anspruchs 14.

Im landwirtschaftlichen Bereich spielen Verfahren zum Verteilen landwirtschaftlichen Verteilguts, entsprechende Verteilmaschinen und Steuerungen dafür eine wichtige Rolle. Bei dem landwirtschaftlichen Verteilgut kann es sich um unterschiedliche Medien beziehungsweise Stoffe handeln. So kommen beispielsweise unterschiedliche granulare Medien, wie Samenkörner, Dünger und ähnliches ebenso in Betracht, wie beispielsweise Flüssigkeiten, insbesondere zur Schädlingsbekämpfung. Je nach Art dieses landwirtschaftlichen Verteilguts können unterschiedliche Verteilverfahren und entsprechende Verteilmaschinen zum Einsatz kommen. Beispielsweise kann es sich um Spritzeinrichtungen für Flüssigkeiten, um Düngerstreueinrichtungen für granularen Dünger, Sämaschinen für Saatgut und verschiedene andere Vorrichtungen handeln.

Eine landwirtschaftliche Feldspritze und ein entsprechendes Verfahren zum Betreiben einer solchen mit einer variabel antreibbaren elektrischen Pumpe sind beispielsweise aus der EP 2 153 710 A2 bekannt. Eine weitere Feldspritze mit den Merkmalen des Oberbegriffs des Anspruchs 1 ist aus der US 4 392 611 A bekannt.

Ferner ist aus der Druckschrift WO 2008/086318 A1 ein Pflanzmaschinenüberwachungssystem bekannt, bei welchem ein Alarm ausgelöst wird, wenn ein vordefinierter Abstand zu einer maximalen Vertikalgeschwindigkeit einer Reiheneinheit einer Sämaschine erreicht wird.

Derartige Verteilmaschinen können einerseits an einem Zugfahrzeug oder Tragfahrzeug befestigt sein, beispielsweise als Anbauvorrichtung mit oder ohne eigenem Fahrwerk. Sie können auch als selbstfahrende Verteilmaschinen ausgebildet sein. Über den Betrieb der Verteilmaschine einschließlich der Fahrtsteuerung wacht zumindest ein Bediener oder Fahrer, sofern die Bedienung oder Steuerung nicht sogar zumindest teilweise oder vollständig manuell erfolgt.

Beim Verteilen beziehungsweise Ausbringen des landwirtschaftlichen Verteilguts sind unterschiedliche Rahmenbedingungen und Grenzen einzuhalten. So ist die tatsächliche Ausbringrate beim Verteilen des landwirtschaftlichen Verteilguts typischerweise auf die eine oder andere Weise limitiert. Hier können zum Beispiel maximale Drehzahlen, Pumpleistungen, Querschnitte oder ähnliches entsprechende Grenzen vorgeben. Somit sind also die unterschiedlichen Betriebsparameter der Verteileinrichtung mit unterschiedlichen Grenzen belegt. So können und müssen für eine vorgegebene Verteilrate die Betriebsparameter der Verteilmaschine innerhalb der vorgegebenen Grenzen variiert werden. Dies ist insbesondere der Fall, da die flächenbezogene Ausbringrate, also die ausgebrachte Menge des landwirtschaftlichen Verteilguts pro Flächeneinheit, im Vorfeld der Bearbeitung für die zu bearbeitende Fläche festgelegt wird. Dabei können sowohl eine konstante Ausbringrate für die gesamte Fläche als auch unterschiedliche Ausbringraten für Teilflächen vorgegeben sein. Es wird also beispielsweise ein bauteilbedingter Grenzwert, beispielsweise eine Drehzahlbegrenzung für eine Spritzmittelpumpe vorliegen, so dass die Pumpleistung begrenzt und die Ausbringmenge nicht beliebig gesteigert werden kann.

Nachteilig an dem bekannten Verteilmaschinen und insbesondere Feldspritzen ist allerdings, dass Begrenzungen beziehungsweise Grenzen der Betriebsparameter zwar wirkungsvoll Beschädigungen der Verteileinrichtung verhindem können. Allerdings geht dies in aller Regel zu Lasten der Verteilgenauigkeit und/oder Arbeitsgeschwindigkeit des landwirtschaftlichen Verteilguts auf dem Feld. Beispielsweise sorgt eine Begrenzung der aktuellen Pumpendrehzahl zwar dafür, dass die Verteilmaschine nicht beschädigt wird, dies kann aber zu einer zu geringen Dosierung beziehungsweise Verteilrate des Verteilguts auf dem entsprechenden Flächenabschnitt führen, wenn mit zu hoher Geschwindigkeit gefahren wird, da die gewünschte Ausbringmenge pro überfahrener Fläche, also die Ausbringrate dann nicht mehr erreicht werden kann.

Die Aufgabe der Erfindung besteht daher darin, ein Verfahren zum Verteilen landwirtschaftlichen Verteilguts, eine Steuerung für eine Verteilmaschine für landwirtschaftliches Verteilgut und eine Verteilmaschine für landwirtschaftliches Verteilgut anzugeben, die die beschriebenen Nachteile beseitigen. Insbesondere soll sichergestellt werden, dass als primäres Ziel die vorgegebene Verteilrate beziehungsweise Flächendosierung erreicht wird. Gleichzeitig soll eine Überlastung der Verteilmaschine wirkungsvoll verhindert werden.

Die Aufgabe wird gelöst durch ein Verfahren zum Verteilen von Spritzflüssigkeit mit wenigstens einer Spritzeinrichtung mit den Maßnahmen des Anspruchs 1. Dementsprechend wird wenigstens eine Aktion ausgelöst, wenn ein vordefinierter Abstand zu einer vorgegebenen Grenze wenigstens eines Betriebsparameters durch den wenigstens einen Betriebsparameter erreicht wird. Dies bedeutet insbesondere, dass auf eine vorgegebene Grenze eines Betriebsparameters reagiert wird. Da dies aber bereits in einem vordefinierten Abstand zur Grenze des Betriebsparameters erfolgt, einer sogenannten "Vorgrenze", besteht noch die Möglichkeit eines weiteren Heranfahrens des Betriebsparameters an die eigentliche Grenze. Als vordefinierter Abstand einer vorgegebenen Grenze des wenigstens einen Betriebsparameters wird eine prozentuale Vorgabe definiert werden. Auch eine Staffelung mit mehreren Stufen ist denkbar. Die Abstände können für verschiedene Betriebsparameter unterschiedlich gewählt sein.

Es können zusätzlich auch untere Grenzwerte als Grenzen vorgesehen sein.

Vorzugsweise sind sowohl die oberen als auch die unteren Grenzwerte als Grenzen vorgegeben, in denen sich die Verteilmaschine in einem sicheren Betriebszustand befindet. Dies bedeutet, dass die Verteilmaschine innerhalb der Grenzen in einem sicheren Betriebszustand betrieben werden kann, ohne dass Beschädigungen an der Maschine zu befürchten sind. Grundsätzlich können derartige Grenzen und Abstände dazu sowohl als obere als auch untere Grenzen vorgegeben sein. Dies hängt im Detail von dem jeweiligen Betriebsparameter ab.

Erfindungsgemäß wird als zumindest eine Aktion ein direkter Eingriff in den Betrieb der Spritzeinrichtung vorgenommen. Dies bedeutet, dass der Betrieb der Spritzeinrichtung vorzugsweise direkt gesteuert beziehungsweise beeinflusst wird, wenn eine entsprechende Annäherung an eine Grenze eines Betriebsparameters erkannt wird. Der Eingriff kann insbesondere auch den Betrieb der Zugmaschine und/oder Selbstfahrwerks der Verteilmaschine betreffen. Erfindungsgemäß wird wenigstens ein Betriebsparameter beeinflusst. Gegebenenfalls können auch verschiedene Betriebsparameter beeinflusst werden, um die entsprechenden vorgegebenen Rahmenbedingungen, wie die vorgegebene Ausbringrate oder ähnliches geeignet einzustellen. Darüber hinaus ist es auch möglich, eine Kopplung mit einer Meldung an den Bediener beziehungsweise Fahrer vorzunehmen. Beispielsweise kann zunächst eine Meldung abgesetzt werden, die bei Nichtbeachtung oder auch Nichtbestätigung zu einer weiteren Aktion führen kann. Bei einer solchen Aktion handelt es sich dann um einen direkten Eingriff in den Betrieb der Verteilmaschine. Gegebenenfalls kann nicht erfindungsgemäß auch die Meldung wenigstens einen Eingriff oder auch alternative Eingriffe vorschlagen. Diese können dann vom Bediener beziehungsweise Fahrer ausgewählt werden, um eine entsprechende Modifikation der Betriebsparameter vorzunehmen.

Wenn gegebenenfalls weitere Betriebsparameter beeinflusst werden, wird die entsprechende Aktion auf das voraussichtliche Erreichen der Grenzen des wenigstens einen Betriebsparameters abgestimmt. Abhängig davon, welcher Betriebsparameter betroffen ist, können dementsprechend unterschiedliche Aktionen im Rahmen des Verfahrens durchgeführt werden. Damit kann gezielt auf das Erreichen oder das baldige Erreichen einer Grenze eines konkreten Betriebsparameters reagiert werden. Da auf ein Erreichen einer Grenze beziehungsweise eines Abstands dazu je nach Betriebsparameter gegebenenfalls unterschiedlich reagiert werden muss, ist eine derartige Unterscheidung aus erfinderischer Sicht sinnvoll und erforderlich.

Nicht erfindungsgemäß kann als zumindest eine Aktion eine Meldung an den Bediener beziehungsweise Fahrer der Verteilmaschine beziehungsweise der damit verbundenen Zugmaschine abgesetzt werden. Eine derartige Meldung kann beispielsweise auf einfache Weise mittels einer Kontrollleuchte oder einer beliebigen anderen, insbesondere elektronischen Anzeige erfolgen. Insbesondere kann auf einem Display eine Meldung angezeigt werden. Auch andere geeignete Signale, wie beispielsweise akustische, visuelle, optische oder ähnliche Meldungen, können in Betracht kommen. Eine derartige Meldung kann insbesondere über ein Informationssystem der Verteilmaschine, gegebenenfalls auch der Zugmaschine übermittelt werden. Hierzu kann beispielsweise ein vorhandenes Display benutzt werden, das insbesondere an der Verteilmaschine beziehungsweise der Zugmaschine zur Steuerung angebracht ist. Ebenfalls kann der Bediener beziehungsweise Fahrer auch eine separate Steuereinrichtung mit sich führen. Es können auch Meldungen auf Mobiltelefone, Datenbrillen, intelligente Uhren oder ähnliches vorgesehen sein.

In der Meldung wird insbesondere das Erreichen des Abstandes zur Grenze des wenigstens einen Betriebsparameters mitgeteilt. Es kann auch das voraussichtliche Erreichen der Grenze des wenigstens einen Betriebsparameters angekündigt werden. Dementsprechend wird das Erreichen der Grenze beziehungsweise des Grenzwertes konkret benannt. Abgesehen von dieser Information können auch weitere Informationen übermittelt werden, wie beispielsweise im Rahmen einer kontinuierlichen oder regelmäßigen Aktualisierung der Meldung mit dem aktuellen Grenzabstand. Gegebenenfalls kann auch auf nahende Änderungen der Betriebsparameter, wie beispielsweise eine erforderliche Erhöhung der Ausbringrate hingewiesen werden. Dies dient insbesondere dazu, den Bediener beziehungsweise Fahrer darauf hinzuweisen, dass möglicherweise einzelne oder alle aktuellen Betriebsparameter nicht geeignet sind, die erhöhte Ausbringrate zu liefern. Gegebenenfalls muss dann an einzelnen Betriebsparametern eine Modifikation vorgenommen werden, beispielsweise durch hinreichende Reduktion der Fahrgeschwindigkeit.

Nicht erfindungsgemäß kann die Verteilmaschine beziehungsweise insbesondere die Zugmaschine und/oder das Fahrwerk der Verteilmaschine, zumindest zeitweise außerhalb der zulässigen Grenzen der Betriebsparameter betrieben werden. Hierzu sind Betriebsparameter zu definieren, die möglicherweise außerhalb der Grenzen laufen dürfen, einschließlich entsprechender erweiterter Grenzen für diese Überschreitung. Dies kann insbesondere dazu dienen, entsprechende Vorgaben an die Verteilung des landwirtschaftlichen Verteilguts einhalten zu können. Insbesondere kann damit erreicht werden, dass eine Verteilrate, die vorgegeben ist, auch eingehalten werden kann. Dieses Überschreiten einzelner Betriebsparameter kann aber in jedem Fall nur als Notlösung oder Ergänzung vorgesehen sein, da dies grundsätzlich erfindungsgemäß verhindert werden soll.

Erfindungsgemäß erfolgt zumindest eine temporäre Anpassung der Steuerung und/oder der Regelung des Betriebs der Verteilmaschine an den wenigstens einen Betriebsparameter beziehungsweise Arbeitsparameter. Vorzugsweise kann der Betrieb der Zugmaschine und/oder des Selbstfahrwerks der Verteilmaschine beeinflusst werden. Durch eine temporäre beziehungsweise zeitweise Anpassung der Regelung beziehungsweise der Betriebsparameter kann vorzugsweise ein dauerhaftes Verstellen der Parameter verhindert werden. Gegebenenfalls können zeitliche Grenzen für die Geltung geänderter Parameter beziehungsweise der Änderungen an der Steuerung beziehungsweise Regelung vorgegeben werden.

Besonders bevorzugt erfolgt eine Anpassung der Steuerung und/oder Regelung des Betriebs beziehungsweise der Betriebsparameter basierend auf Messwerten und/oder Kartendaten. Die entsprechenden Messwerte oder auch Kartendaten können sich mit lokalen Gegebenheiten des zu bearbeitenden Flächenstücks befassen. Beispielsweise können Randstücke, unterschiedliche Böden oder Nährstoffzustände beziehungsweise unterschiedlicher Vorbewuchs berücksichtigt werden. Dementsprechend können auch Fahrtgeschwindigkeiten, Ausbringraten oder ähnliches an diese Daten angepasst werden. Die entsprechend durchzuführenden Aktionen können dann diese Daten berücksichtigen.

Des Weiteren kann vorausschauend, insbesondere in Fahrtrichtung, eine Anpassung der Betriebsparameter vorgenommen werden. Dies bedeutet, dass beispielsweise bei zu erwartenden Änderungen in Fahrtrichtung, wie beispielsweise eine Änderung der vorgegebenen Ausbringrate, eines Gefälles, des Bodenzustands, der Berandung und ähnlichem, eine Erhöhung oder Erniedrigung wenigstens eines Betriebsparameter im Voraus sinnvoll sein kann. In diesem Fall kann dann im Vorhinein eine entsprechende Reduzierung der Fahrtgeschwindigkeit erfolgen, um beispielsweise die Ausbringrate auch unter den veränderten Bedingungen immer noch sicherstellen zu können. Durch diese Vorausplanung bei der Bearbeitung der Fläche mittels der Verteilmaschine kann dann die vordefinierte Ausbringrate in jedem Fall erfindungsgemäß sichergestellt werden.

Die eingangs genannte Aufgabe wird außerdem gelöst durch eine computerbasierte Steuerung, für eine Verteilmaschine für landwirtschaftliches Verteilgut mit den Merkmalen des Anspruchs 12. Die Steuerung ist erfindungsgemäß zur Implementierung und/oder Durchführung des Verfahrens gemäß den obigen Beschreibungen ausgebildet. Die Steuerung zeichnet sich dabei dadurch aus, dass wenigstens eine Aktion in Abhängigkeit vom Erreichen eines vordefinierten Abstands zu wenigstens einer vorgegebenen Grenze wenigstens eines Betriebsparameters und/oder vom Erreichen wenigstens einer Grenze wenigstens eines Betriebsparameters ausgelöst wird, wobei als Aktion der Betrieb der Verteilmaschine bezüglich wenigstens eines Betriebssparameters beinflussbar und/oder steuerbar ist. Dabei kann es sich um unterschiedliche Aktionen handeln. Ziel ist es, einerseits die Betriebsparameter einhalten zu können und andererseits insbesondere eine im Vorhinein der Bearbeitung vorgegebene Verteilrate auf dem zu bearbeitenden Flächenstück einzuhalten. Vorzugsweise kann der Betrieb der Verteilmaschine und/oder der Betrieb der Zugmaschine, der Verteilmaschine und/oder der Betrieb des Selbstfahrwerks der Verteilmaschine durch die Steuerung direkt oder indirekt beeinflusst werden. Gleichfalls kann auch wenigstens eine Meldung an einen Bediener oder Fahrer als weitere Aktion absetzbar sein. Eine derartige Meldung kann insbesondere auch an einen Fahrer oder Bediener der Verteilmaschine, der Zugmaschine, beziehungsweise des Selbstfahrwerks gesendet werden. Dies ist im Detail weiter oben zum Verfahren detailliert beschrieben.

Die übrigen Merkmale des oben beschriebenen Verfahrens können im Übrigen ebenfalls durch die Steuerung implementiert werden, wie dies oben beschrieben ist.

Die eingangs formulierte Aufgabe wird außerdem gelöst durch eine Verteilmaschine für landwirtschaftliches Verteilgut mit den Merkmalen des Anspruchs 14. Erfindungsgemäß handelt es sich dabei um eine Spritzeinrichtung. Die Verteilmaschine weist insbesondere einen Vorrat an Verteilgut und wenigstens eine Verteilvorrichtung für das Verteilgut auf. Die aktuellen Betriebsparameter der Verteilvorrichtung werden insbesondere erfasst, vorzugsweise mit entsprechenden Messgeräten. Dabei werden Grenzen der Betriebsparameter, insbesondere Verteilparameter der Verteilvorrichtung vordefiniert. Diese Vordefinition kann sich anhand von mehr oder weniger frei gewählten Grenzziehungen ergeben oder insbesondere durch maschinelle beziehungsweise das Verteilgut betreffende Rahmenbedingungen vorgegeben sein. Die Verteilmaschine zeichnet sich dadurch aus, dass der Betrieb der Verteilvorrichtung und/oder der Betrieb der Zugmaschine der Verteilvorrichtung und/oder der Betrieb des Selbstfahrwerks der Verteilvorrichtung durch die Steuerung beeinflussbar ist. Diese Beeinflussbarkeit erfolgt erfindungsgemäß in direkter Weise. Nicht erfindungsgemäß kann die Steuerung durch eine Rückmeldung an den Bediener beziehungsweise Fahrer dafür sorgen, dass der Betrieb beeinflusst wird. Erfindungsgemäß erfolgt ein direkter Einfluss der Steuerung auf die Verteilvorrichtung, die Zugmaschine beziehungsweise das Selbstfahrwerk. Die Steuerung kann insbesondere für den gesamten Betrieb der Verteilmaschine oder auch nur Teile desselben verantwortlich sein.

Nicht erfindungsgemäß ist die Verteilmaschine durch Aktionen der Steuerung in ihrer Arbeitsweise beinflussbar. Durch eine derartige Aktion kann insbesondere der Fahrer beziehungsweise Bediener eine entsprechende Meldung für eine manuelle oder automatische Einflussnahme auf dem Betrieb der Verteilmaschine, der Zugmaschine oder auch des Selbstfahrwerks erhalten. Es können aber auch ohne Weiteres direkte Einflussnahmen einer Änderung einzelner Betriebsparameter durch die Steuerung erfolgen. Die Verteilmaschine ist dementsprechend durch entsprechende Aktionen steuerbar. Damit kann sichergestellt werden, dass die Verteileinrichtung immer im zulässigen Bereich der Betriebsparameter arbeitet. Andererseits kann gleichzeitig eine korrekte Ausbringung des landwirtschaftlichen Verteilguts sichergestellt werden, auch im Falle grenzwertiger Betriebsparameter. Insbesondere durch die entsprechenden, oben beschriebenen Verfahrensschritte kann sichergestellt werden, dass ein Erreichen eines Grenzwertes eines Betriebsparameters durch andere Betriebsparameter kompensiert werden kann. Durch frühzeitige, insbesondere vorausschauende Einstellung der Betriebsparameter kann außerdem eine Überlastung beziehungsweise eine falsche Ausbringrate des Verteilguts verhindert werden.

Nicht erfindungsgemäß können einzelne Betriebsparameter, wie insbesondere die Verteilrate insgesamt, eine Pumpenleistung, die Fahrgeschwindigkeit, die Leistung eines Rührwerks oder Ähnliches, durch die Steuerung regelbar sein. Insbesondere kann dies in Abhängigkeit vom Erreichen eines vordefinierten Abstands zu einem Grenzwert des Betriebsparameters erfolgen.

Bevorzugte Ausführungsbeispiele werden im Folgenden anhand der Zeichnungen näher beschrieben. In diesen zeigen:

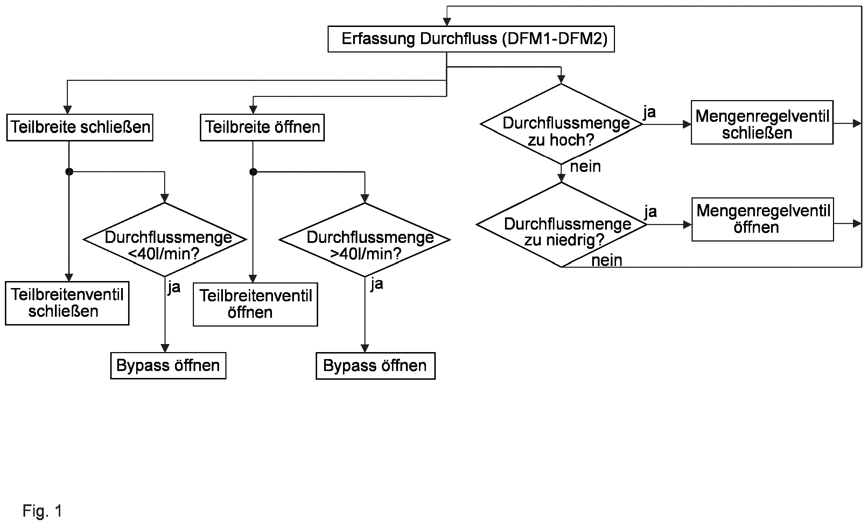

- Fig. 1: ein Flussdiagramm einer herkömmlichen Teilbreitenschaltung und Mengenregelung bei einer herkömmlichen Spritzeinrichtung für landwirtschaftliche Zwecke,
- Fig. 2: ein Flussdiagramm für eine erfindungsgemäße Spritzeinrichtung mit einer Hinweismeldung,
- Fig. 3: eine erfindungsgemäße Spritzeinrichtung mit einer Anpassung des Rührdrucks und einer Meldung,
- Fig. 4: eine erfindungsgemäße Spritzeinrichtung mit einer Änderung der Fahrgeschwindigkeit,
- Fig. 5: eine erfindungsgemäße Spritzeinrichtung mit einer Änderung der Pumpendrehzahl,
- Fig. 6: eine erfindungsgemäße Spritzeinrichtung mit einer Änderung der Pumpendrehzahl und der Fahrgeschwindigkeit, und
- Fig. 7: eine erfindungsgemäße Spritzeinrichtung mit einer Änderung der Pumpendrehzahl, der Fahrgeschwindigkeit und des Rührdrucks.

Zunächst wird die Erfindung anhand eines Beispiels einer Spritzeinrichtung für landwirtschaftliche Zwecke geschrieben.

Derartige Spritzvorrichtungen dienen dazu, Flüssigkeiten auf ein Feld auszubringen. Hierzu ist ein entsprechender Tank zur Bevorratung einer Spritzflüssigkeit beziehungsweise Spritzbrühe vorgesehen. Darüberhinaus ist eine Pumpe als Spritzmittelpumpe zur Förderung des Spritzmittels und Versorgung einer Reihe voneinander beanstandeter Spritzdüsen vorgesehen. Die Spritzdüsen dienen zum Versprühen des Spritzmittels auf die zu bearbeitende Fläche, insbesondere ein Feld. Als eine weitere Komponente dient typischerweise ein Rührwerk zur Durchmischung der Spritzflüssigkeit im entsprechenden Tank.

Schließlich wird die Spritzeinrichtung entweder als Anbauteil für eine Zugmaschine, wie beispielsweise einen Traktor oder ähnliches, bereitgestellt. Die Spritzeinrichtung kann dabei auch zusätzlich ein eigenes Fahrwerk aufweisen. Schließlich kann die Spritzeinrichtung auch als selbstfahrende Spritzeinrichtung ausgebildet sein.

Bei den zu verspritzenden Flüssigkeiten handelt es sich typischerweise um Düngemittel, Pflanzenschutzmittel und ähnliches. Die erforderlichen, auf dem Feld beziehungsweise auf die Pflanzen auszubringenden Mengen werden im Vorfeld der Bearbeitung des Feldes beziehungsweise der Fläche festgelegt. Es werden dabei flächenbezogene Werte angegeben. Hierbei können konstante Ausbringraten für die gesamte Fläche vorgesehen sein. Gleichfalls können auch einzelne Abschnitte mit unterschiedlichen Ausbringraten versehen werden.

Die Ausbringrate wird durch verschiedene Betriebsparameter der Spritzeinrichtung beeinflusst. Insbesondere ist dies die durch die Spritzdüsen freigegebene Menge der Spritzflüssigkeit. Durch die Spritzmittelpumpe und die entsprechenden Flüssigkeitsleitungen wird typischerweise eine maximale Ausbringrate definiert. Dies ist allerdings immer auf die Fahrgeschwindigkeit der Spritzeinrichtung bezogen. Durch Variation der Fahrgeschwindigkeit kann die Ausbringrate in Spritzmittelmenge pro Flächeneinheit ebenfalls variiert werden. Bei einer zu großen Fahrgeschwindigkeit kann eine Unterversorgung der Fläche mit Spritzmittel erfolgen, wenn der Durchsatz der Spritzdüsen nicht mehr erhöht werden kann. Diese Effekte treten auch auf, wenn Teilbreiten der Spritzeinrichtung geöffnet oder geschlossen werden. Dies bedeutet, dass Abschnitte der ausladenden Seitenarme eingeschaltet oder abgeschaltet werden. Mit anderen Worten werden Gruppen von Spritzdüsen ein- oder abgeschaltet, um so beispielsweise Bereiche in seitlicher Richtung auszusparen. Gegebenenfalls sind Beipassventile zu öffnen oder zu schließen, wenn die Durchflussmenge gewisse Grenzwerte, hier zum Beispiel als typischer Wert 40 Liter/Minute unter- beziehungsweise überschreitet. Dies ist insbesondere immer zu prüfen, wenn einzelne Teilbreiten des Spritzgestänges beziehungsweise deren Spritzdüsen geöffnet oder geschlossen werden, aktiviert oder deaktiviert werden.

Ist die erfasste Durchflussmenge der Spritzvorrichtung insgesamt zu hoch oder zu niedrig, kann ein entsprechendes Mengenregelventil geschlossen oder geöffnet werden. Damit kann der gesamte Durchfluss der Spritzeinrichtung eingestellt werden.

Erfindungsgemäß wird nunmehr kein einfaches Ein- und Abschalten der Spritzeinrichtung vorgenommen, wenn die entsprechenden Grenzwerte, nämlich eine zu hohe oder zu geringe Durchflussmenge als Betriebsparameter, erreicht werden. Stattdessen wird bereits vor Erreichen dieser Grenzen beziehungsweise Grenzwerte eine entsprechende Aktion durchgeführt, wenn also noch Regelungsmöglichkeiten in Bezug auf den Betriebsparameter gegeben sind.

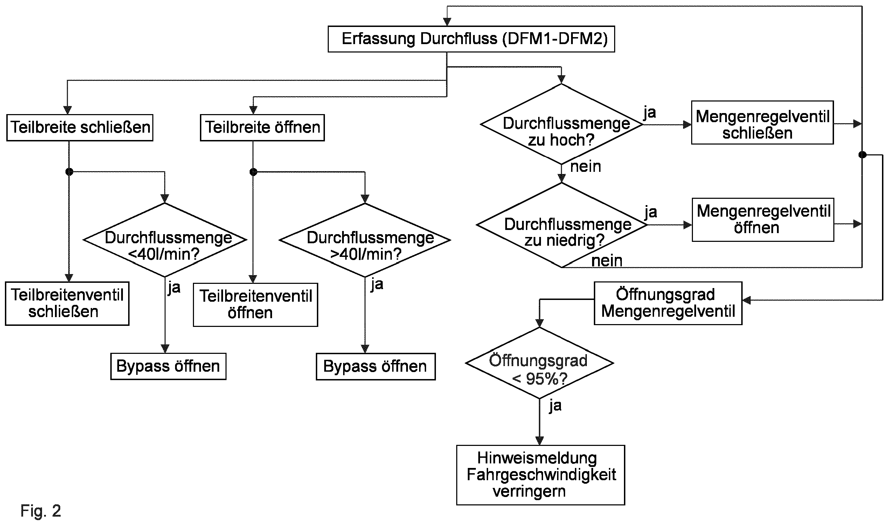

Im vorliegenden Fall wird beispielsweise, wie dies in Fig. 2 zu sehen ist, bei einem Öffnungsgrad des Mengenregelventils von kleiner 95% eine Hinweismeldung an den Bediener beziehungsweise Fahrer der Spritzeinrichtung beziehungsweise des zugeordneten Fahrzeugs gegeben. Demnach soll dieser die Fahrgeschwindigkeit verringern, um auch bei einem erforderlichen Erhöhen des Öffnungsgrades des Mengenregelventils immer noch eine hinreichende Ausbringrate der Spritzflüssigkeit sicherstellen zu können. Es verbleibt demnach ein Regelbereich des Mengenregelventils von zumindest etwa 5%, indem eine Reduktion der Fahrgeschwindigkeit vorgenommen wird.

Eine entsprechende Meldung an den Bediener beziehungsweise Fahrer kann insbesondere durch eine Kontrolllampe oder auch ein Display erfolgen. Auch andere Benachrichtigungen, wie insbesondere akustische, optische oder haptische Benachrichtigungen, sind denkbar.

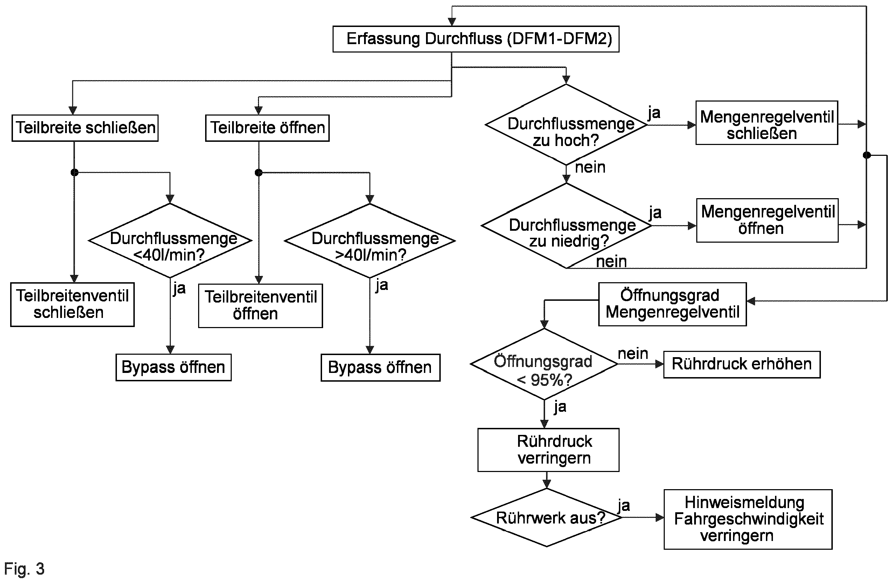

In einem Beispiel gemäß Fig. 3 wird zunächst der Rührdruck des Rührwerks abhängig vom Öffnungsgrad des Mengenregelventils variiert. Da das Rührwerk als zusätzlicher Verbraucher an der Pumpe sitzt, kann somit die Durchflussmenge erhöht werden. Das Rührwerk wird somit zumindest zeitweise in der Leistung reduziert oder sogar ganz abgeschaltet.

Für den Fall, dass das Rührwerk bereits vollständig abgeschaltet wurde, ist hier erfindungsgemäß vorgesehen, dass dann eine entsprechende Hinweismeldung an den Bediener beziehungsweise Fahrer gegeben wird. Als Hinweis an diesen wird mitgeteilt, dass idealerweise die Fahrgeschwindigkeit verringert werden sollte. Damit kann erreicht werden, dass die Ausbringrate dennoch im vorher bestimmten Rahmen gehalten werden kann.

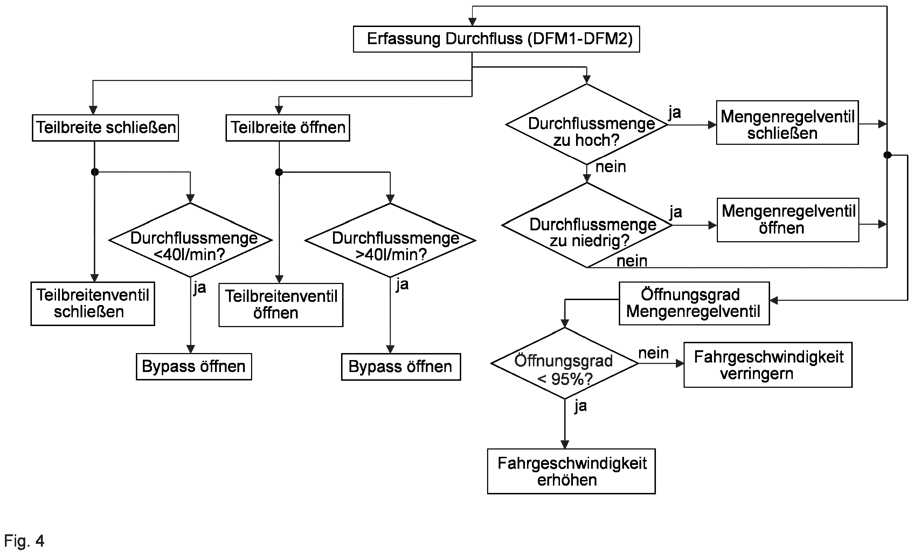

Die Lösung der Fig. 4 setzt dagegen auf eine direkte Beeinflussung der Fahrgeschwindigkeit durch die für den Betrieb der Spritzvorrichtung verantwortliche Steuerung.

Beispielhaft wird hier auch wieder der Öffnungsgrad des Mengenregelventils von kleiner oder größer 95% des Gesamtregelbereichs bearbeitet. Ist der Öffnungsgrad kleiner 95%, kann die Fahrgeschwindigkeit erhöht werden, um somit den entsprechenden Teilbereich der zu bearbeitenden Fläche schneller bearbeiten zu können. Umgekehrt kann bei einem Erreichen oder Überschreiten des vordefinierten Öffnungsgrads beziehungsweise Abstand zum Grenzwert des Öffnungsgrads die Fahrgeschwindigkeit verringert werden. Dies führt dazu, dass dann immer noch ein Regelbereich für den Öffnungsgrad bereit gehalten wird, um gegebenenfalls die Flächenleistung entsprechend anpassen zu können.

Die Änderung der Fahrgeschwindigkeit kann insbesondere mittels des sogenannten "Tractor-Implement-Management" (TIM) Protokolls durchgeführt werden. Mit anderen Worten steuert das Gerät, in diesem Fall die Spritzeinrichtung, die Zugmaschine, also den Traktor. Damit kann eine direkte Beeinflussung der Fahrgeschwindigkeit erfolgen.

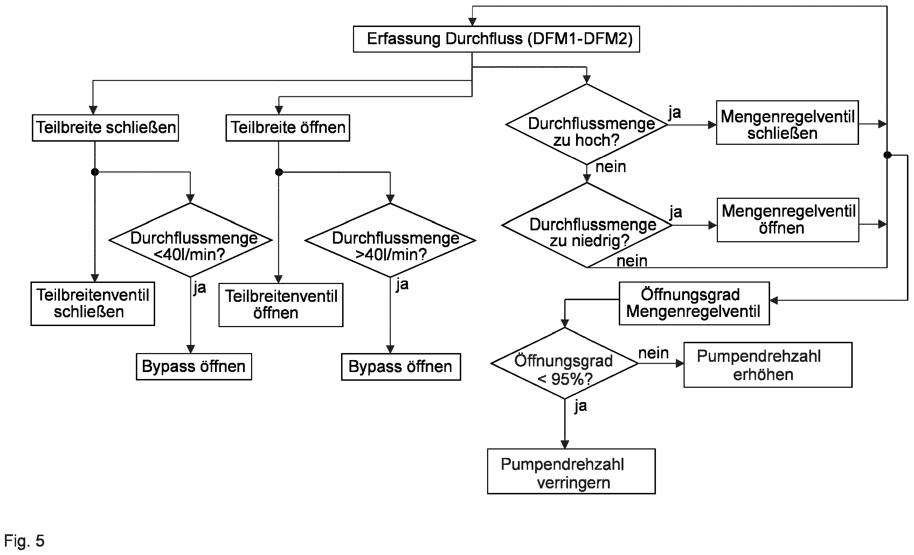

Das in der Fig. 5 gezeigte Ausführungsbeispiel arbeitet mit einer Änderung der Pumpendrehzahl, abhängig von einem Grenzwert des Öffnungsgrades des Mengenregelventils. Auch hier wird bei einem vordefinierten Abstand des Betriebsparameters Öffnungsgrad des Mengenregelventils von dessen oberer Grenze 100 % eine entsprechende Aktion durchgeführt. Auch in diesem Fall ist der Abstand des Betriebsparameters vom entsprechenden Grenzwert auf 5% festgelegt. Dementsprechend beträgt der Öffnungsgrad, bei dem eine entsprechende Aktion durchgeführt wird, 95 %. Erfindungsgemäß werden Werte zwischen 20% und 1% vorgesehen.

In vorliegenden Fall wird die Pumpendrehzahl der Spritzmittelpumpe variiert.

Beträgt der Öffnungsgrad weniger als 95%, wird in diesem Fall die Pumpendrehzahl verringert. Ist der Öffnungsgrad des Mengenregelventils größer 95%, wird die Pumpendrehzahl entsprechend erhöht. Damit kann der Durchsatz der Spritzeneinrichtung insgesamt erhöht werden. Abhängig vom Öffnungsgrad des Mengenregelventils kann somit die Pumpendrehzahl als entsprechender variabler Betriebsparameter eingestellt werden.

Indem hier eine variabel einstellbare Spritzmittelpumpe verwendet wird, lässt sich dieser Betriebsparameter in weiten Grenzen variieren. Es kann sich bei der entsprechenden Spritzmittelpumpe, insbesondere um eine hydraulisch angetriebene Pumpe handeln. Gegebenenfalls kommen aber auch andere Pumpentypen, wie beispielsweise elektrisch angetriebene Pumpen oder Ähnliches in Betracht. Vorteilhaft ist hier allerdings ein hydraulischer Antrieb.

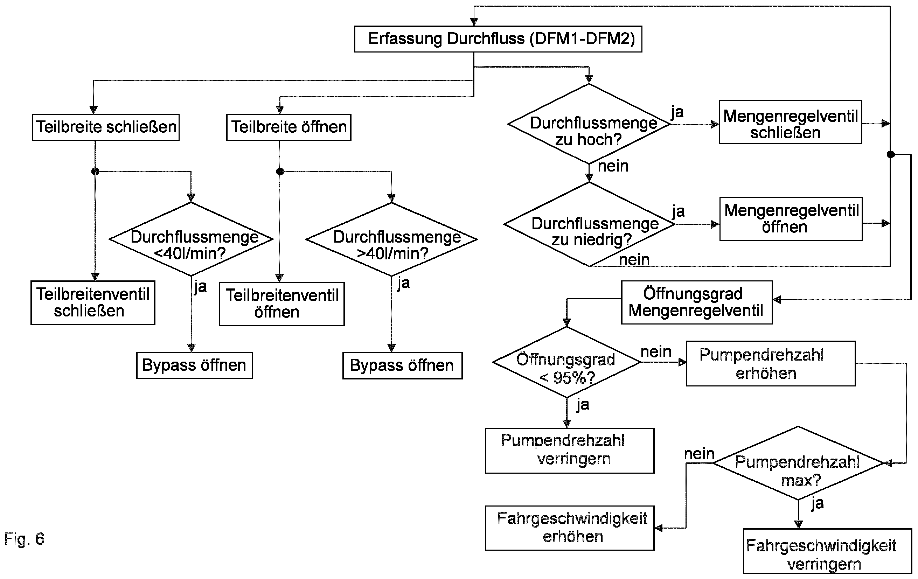

Allerdings kann die Pumpendrehzahl auch nur im Rahmen der vordefinierten Grenzen erhöht oder erniedrigt werden. Im Idealfall wird daher eine Kombination eines Einflusses auf verschiedene Betriebsparameter vorgenommen werden. Dies ist insbesondere in Fig. 6 gezeigt. Hier werden sowohl die Pumpendrehzahl als auch die Fahrgeschwindigkeit variiert. Dies geschieht in der Form, dass die Pumpendrehzahl zunächst abhängig vom Öffnungsgrad des Mengenregelventils erhöht oder erniedrigt wird. Auch hier wird wieder ein Wert von 95 % des maximalen Öffnungsgrades als Abstand von der Grenze beziehungsweise dem Grenzwert angenommen. Sofern der Öffnungsgrad noch kleiner als 95% ist, kann die Pumpendrehzahl in den für diese vorgegebenen Grenzen erhöht werden.

Hat allerdings der Öffnungsgrad bereits 95% des maximalen Öffnungsgrads erreicht oder überschritten, ist die Pumpendrehzahl zu erhöhen. In diesem Fall greift eine zweite Bedingung. Solange die Pumpendrehzahl noch nicht im Maximum erreicht hat, kann die Fahrtgeschwindigkeit erhöht werden, um so über die Pumpendrehzahl noch eine Variationsmöglichkeit für eine mögliche Erhöhung des Spritzmitteldurchsatzes zu erreichen. Somit dient die Pumpendrehzahl als zusätzlicher, variabler Betriebsparameter.

Hat die Pumpendrehzahl dagegen bereits ihr Maximum erreicht, kann dieser Betriebsparameter nicht mehr erhöht werden. In diesem Fall wird dann die Fahrgeschwindigkeit verringert, um so unter allen Bedingungen die vorherbestimmte Ausbringrate sicherstellen zu können. Durch eine Verringerung der Fahrgeschwindigkeit kann dann beispielsweise die Pumpendrehzahl beziehungsweise der Öffnungsgrad des Mengenregelventils verringert werden, um so die ausgebrachte Menge an Spritzmittel pro Fläche entsprechend den vorgegebenen Werten einstellen zu können. Eine Reduzierung ist erforderlich, da bei einer Reduzierung der Fahrgeschwindigkeit die ausgebrachte Menge pro Flächeneinheit erhöht wird. Somit ist an dieser Stelle nachzuregeln.

Zur Erhöhung der Effizienz wäre es auch denkbar, eine maximale Fahrgeschwindigkeit, welche aus pflanzenbaulicher Sicht als noch sinnvoll erscheint, zu definieren. Diese Fahrgeschwindigkeit, soll möglichst erreicht werden, um so eine möglichst zügige Bearbeitung der landwirtschaftlichen Fläche zu ermöglichen. In diesem Fall würde die Fahrgeschwindigkeit bei Nichterreichen des Grenzwertes der Pumpendrehzahl nur dann gemäß Fig. 6 erhöht, wenn die maximale Fahrgeschwindigkeit oder ein Grenzwert von bspw. 95% hiervon noch nicht erreicht sind. Andernfalls würde in einem weiteren Schritt zur Energieersparnis die Pumpendrehzahl reduziert.

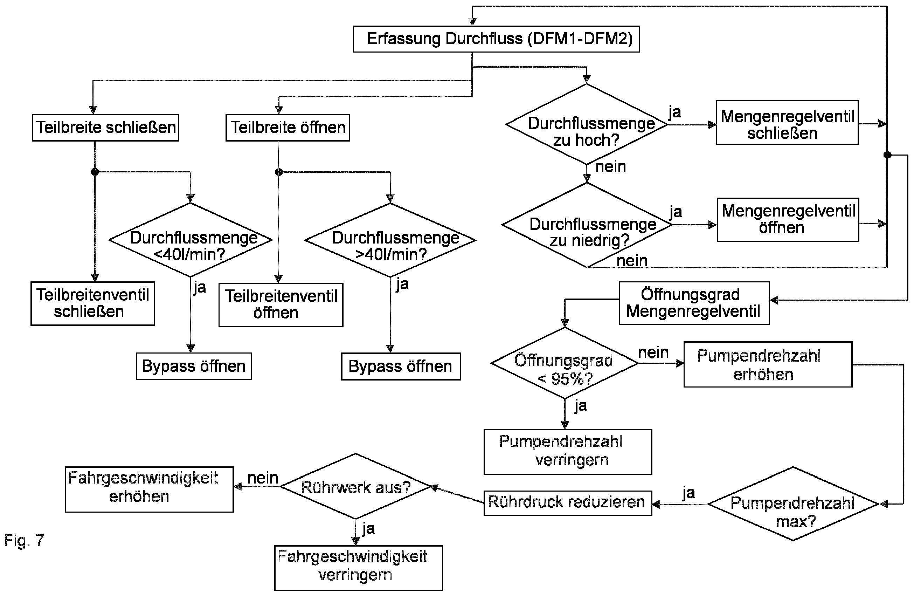

In einem weiteren Beispiel wird eine komplexe Regelung mehrerer Betriebsparameter vorgenommen. Dies ist in der Fig. 7 dargestellt.

In diesem Fall wird der Öffnungsgrad des Mengenregelventils von kleiner oder größer 95% wieder als Kriterium für die Erhöhung oder Erniedrigung der Pumpendrehzahl angenommen. Sobald in diesem Fall die Pumpendrehzahl beim Öffnungsgrad von mehr als 95% des Mengenregelventils ihr Maximum erreicht, wird allerdings kein direkter Einfluss auf die Fahrgeschwindigkeit vorgenommen. Stattdessen wird zunächst der Rührdruck reduziert. Dies geschieht dadurch, dass das Rührwerk in seiner Leistung zurückgefahren wird. Dies sorgt dafür, wie oben bereits beschrieben wurde, dass die abgegebene Pumpenleistung erhöht werden kann, da das Rührwerk als zusätzlicher Verbraucher an der Spritzmittelpumpe hängt. Dementsprechend kann die zusätzliche Pumpenleistung zum Ausbringen der Spritzflüssigkeit verwendet werden. Die Pumpendrehzahl kann gleichwohl beim Maximum verbleiben, sofern eine stufenlose Reduzierung des Rührdrucks möglich ist. Ist dies nicht der Fall, kann auf andere Weise die tatsächliche Ausbringrate variiert werden.

Sollte der Rührdruck soweit reduziert worden sein, dass das Rührwerk abgeschaltet ist, sind weitere Maßnahmen zu treffen. In diesem Fall wird dann ein direkter Einfluss auf die Fahrgeschwindigkeit genommen. Insbesondere wird die Fahrgeschwindigkeit verringert, wenn das Rührwerk abgeschaltet ist. Ist das Rührwerk wieder eingeschaltet, kann die Fahrgeschwindigkeit erhöht werden.

Die hier beschriebenen einzelnen Schritte beziehungsweise fallweisen Entscheidungen bezüglich der Betriebsparameter können nicht nur als einzelne, aufeinander aufbauende Entscheidungen getroffen werden. Stattdessen lassen sich die einzelnen Parameter in Teilen zumindest unabhängig voneinander beeinflussen. Insgesamt kann durch das Zusammenspiel der verschiedenen Einflussfaktoren die Ausbringrate der Spritzflüssigkeit entsprechend eingestellt werden.

Abgesehen von dem hier exemplarisch diskutierten Beispiel der Spritzmittelpumpe könnten auch andere geeignete Verteilmaschinen in ähnlicher Weise gesteuert werden. Beispielsweise kann bei landwirtschaftlichen Verteilmaschinen, die mit granularen Medien arbeiten, wie beispielsweise ein Düngerstreuer oder eine Sämaschine, eine entsprechende Steuerung der Ausbringrate in ähnlicher Weise erfolgen. Hier ist dann insbesondere eine Streuvorrichtung in geeigneter Weise zu beeinflussen.

Bei einem Düngerstreuer kann dies insbesondere über eine Variation der Drehgeschwindigkeit des Streutellers erfolgen. Auch können unterschiedliche Leitbleche ein- oder ausgefahren werden, um die Ausbringrate zu modifizieren. Schließlich kann auch die aus einem entsprechenden Vorratsbehälter zugeführte Menge an Dünger pro Zeiteinheit variiert werden. Dies kann beispielsweise mit einer entsprechenden Blende erfolgen.

Auch eine Sämaschine weist entsprechende Komponenten zum Einstellen der ausgebrachten Mengen auf. Neben entsprechenden Blenden zum Einstellen der aus einem Vorratsbehälter entnommenen Mengen pro Zeiteinheit können die tatsächlichen Dosierungen in geeigneter und an sich bekannter Weise variiert werden.

In jedem Fall ist einer der Parameter die Fahrgeschwindigkeit der Verteileinrichtung als solches. Durch eine Kombination der unterschiedlichen Einflussfaktoren auf die Ausbringrate lassen sich insbesondere in geeigneter Weise Unterschreitungen der auszubringenden Mengen pro Flächeneinheit vermeiden. Dies wird insgesamt durch einen frühzeitigen Eingriff in die Steuerung bei Erreichen eines vordefinierten Abstands zu einer Grenze erreicht. Somit bleibt für die übrigen Parameter noch Variationsbereich übrig, um so in jedem Fall die vorgegebene Ausbringrate einhalten zu können.

## Patentansprüche

1. Verfahren zum Verteilen von Spritzflüssigkeit mit wenigstens einer Spritzeinrichtung, wobei zulässige Grenzen für wenigstens einen Betriebsparameter der Spritzeinrichtung vorgegeben werden und wenigstens eine Aktion ausgelöst wird, wenn ein vordefinierter Abstand zu einer vorgegebenen Grenze wenigstens eines Betriebsparameters durch den wenigstens einen Betriebsparameter erreicht wird;
**dadurch gekennzeichnet, dass** als zumindest eine Aktion mittels direkten Eingriffs in den Betrieb der Spritzeinrichtung zumindest eine temporäre Anpassung der Steuerung und/oder Regelung des Betriebs der Spritzeinrichtung an den wenigstens einen grenzwertigen Betriebsparameter erfolgt, wobei bei einem vordefinierten Abstand des Betriebsparameters Öffnungsgrad des Mengenregelventils von dessen oberer Grenze eine Änderung der Pumpendrehzahl durchgeführt wird, wobei der Abstand des Öffnungsgrads vom Grenzwert zwischen 20% und 1% festgelegt ist und die Pumpendrehzahl verringert wird, wenn der Öffnungsgrad unterhalb des Abstands vom Grenzwert liegt und die Pumpendrehzahl erhöht wird, wenn der Öffnungsgrad oberhalb des Abstands vom Grenzwert liegt.

2. Verfahren nach Anspruch 1,
**dadurch gekennzeichnet, dass** die Spritzeinrichtung zum Verteilen der Spritzflüssigkeit verfahren wird, insbesondere mittels einer Zugmaschine und/oder eines Selbstfahrwerks, und/oder wobei das Verteilen durch einen Bediener gesteuert und/oder überwacht wird.

3. Verfahren nach Anspruch 1 oder 2,
**dadurch gekennzeichnet, dass** auch untere Grenzwerte als Grenzen vorgegeben sind, zumindest innerhalb derer die Spritzeinrichtung in einem sicheren Betriebszustand betrieben werden kann.

4. Verfahren nach einem der vorstehenden Ansprüche,
**dadurch gekennzeichnet, dass** die wenigstens eine Aktion auf das voraussichtliche Erreichen der Grenzen des wenigstens einen Betriebsparameters abgestimmt wird.

5. Verfahren nach zumindest einem der vorhergehenden Ansprüche,
**dadurch gekennzeichnet, dass** als weitere Aktion zumindest eine Meldung an den Bediener beziehungsweise Fahrer der Spritzeinrichtung und/oder der damit verbundenen Zugmaschine abgesetzt wird.

6. Verfahren nach Anspruch 5,
**dadurch gekennzeichnet, dass** in der Meldung das Erreichen des Abstands zur Grenze und/oder das voraussichtliche Erreichen der zulässige Grenze des wenigstens einen Betriebsparameters angekündigt wird.

7. Verfahren nach zumindest einem der vorhergehenden Ansprüche,
**dadurch gekennzeichnet, dass** als weitere Aktion ein Eingriff in den Betrieb der Zugmaschine und/oder des Selbstfahrwerks der Spritzeinrichtung, vorzugsweise bezüglich wenigstens eines Betriebsparameters.

8. Verfahren nach zumindest einem der vorhergehenden Ansprüche,
**dadurch gekennzeichnet, dass** die Spritzeinrichtung zumindest zeitweise außerhalb der zulässigen Grenzen der Betriebsparameter betrieben wird, insbesondere um Vorgaben an die Verteilung der Spritzflüssigkeit einzuhalten.

9. Verfahren nach zumindest einem der vorhergehenden Ansprüche,
**dadurch gekennzeichnet, dass** die Anpassung der Steuerung und/oder Regelung des Betriebs basierend auf Messwerten und/oder Kartendaten erfolgt.

10. Verfahren nach zumindest einem der vorhergehenden Ansprüche,
**dadurch gekennzeichnet, dass** vorausschauend in Fahrtrichtung eine Anpassung der Betriebsparameter vorgenommen wird.

11. Verfahren nach zumindest einem der vorhergehenden Ansprüche,
**dadurch gekennzeichnet, dass** wenigstens ein Betriebsparameter geeignet ist, zumindest einen der folgenden Parameter zu charakterisieren: eine Pumpleistung oder eine Fahrgeschwindigkeit oder einen Rührdruck oder eine Dosiermenge.

12. Computerbasierte Steuerung für eine Spritzeinrichtung, eingerichtet zur Implementierung und Durchführung des Verfahrens nach einem der vorhergehenden Ansprüche, **dadurch gekennzeichnet, dass** wenigstens eine Aktion in Abhängigkeit vom Erreichen eines vordefinierten Abstands zu wenigstens einer vorgegebenen Grenze wenigstens eines Betriebsparameters ausgelöst wird.

13. Steuerung nach Anspruch 12,
**dadurch gekennzeichnet, dass** als weitere Aktion der Betrieb der Zugmaschine der Spritzeinrichtung und/oder der Betrieb des Selbstfahrwerks der Spritzeinrichtung, beinflussbar und/oder steuerbar ist, und/oder dass als weitere Aktion eine Meldung an den Bediener und/oder Fahrer absetzbar ist.

14. Spritzeinrichtung mit einer Steuerung nach Anspruch 11 oder 12, wobei die Spritzeinrichtung einen Vorrat an Spritzflüssigkeit und wenigstens eine Verteilvorrichtung für die Spritzflüssigkeit aufweist, wobei die aktuellen Betriebsparameter der Spritzeinrichtung mit entsprechenden Messgeräten erfasst werden und wobei Grenzen der Betriebsparameter, insbesondere Verteilparameter, der Spritzeinrichtung vordefiniert sind, wobei der Betrieb der Spritzeinrichtung und/oder der Betrieb der Zugmaschine der Spritzeinrichtung und/oder der Betrieb des Selbstfahrwerks der Spritzeinrichtung, durch die Steuerung steuerbar ist, **dadurch gekennzeichnet, dass** eine Steuerung über wenigstens eine Aktion bei Erreichen eines vordefinierten Abstandes zu einer Grenze des wenigstens einen Betriebsparameters vorgesehen ist, wobei die Steuerung eingerichtet ist, als zumindest eine Aktion mittels direkten Eingriffs in den Betrieb der Spritzeinrichtung zumindest eine temporäre Anpassung der Steuerung und/oder Regelung des Betriebs der Spritzeinrichtung an den wenigstens einen grenzwertigen Betriebsparameter durchzuführen, wobei bei einem vordefinierten Abstand des Betriebsparameters Öffnungsgrad des Mengenregelventils von dessen oberer Grenze eine Änderung der Pumpendrehzahl durchgeführt wird, wobei der Abstand des Öffnungsgrads vom Grenzwert zwischen 20% und 1% festgelegt ist und die Pumpendrehzahl verringert wird, wenn der Öffnungsgrad weniger als der Abstand beträgt und die Pumpendrehzahl erhöht wird, wenn der Öffnungsgrad größer als der Abstand ist.

15. Spritzeinrichtung nach Anspruch 14,
**dadurch gekennzeichnet, dass** als weitere Aktion eine Meldung an den Bediener und/oder Fahrer absetzbar ist.

16. Spritzeinrichtung nach Anspruch 14,
**dadurch gekennzeichnet, dass** als weitere Aktion eine Änderung wenigstens eines der Betriebsparameter vorgesehen ist, insbesondere einer Verteilrate, einer Pumpenleistung, einer Fahrgeschwindigkeit, eines Rührwerkbetriebs, einer Dosiermenge oder ähnlichem.

## Claims

1. Method for distributing spraying liquid with at least one spraying device, permissible limits being predetermined for at least one operating parameter of the spraying device and at least one action being triggered when a predefined distance from a predetermined limit of at least one operating parameter is reached by the at least one operating parameter;
**characterized in that** at least one temporary adaptation of the control and/or regulation of the operation of the spraying device to the at least one limiting operating parameter is carried out as at least one action by means of direct intervention in the operation of the spraying device, a change in the pump speed being carried out at a predefined distance of the operating parameter degree of opening of the quantity control valve from its upper limit, the distance of the degree of opening from the limit value being set between 20% and 1%, and the pump speed being reduced when the degree of opening is below the distance from the limit value, and the pump speed being increased when the degree of opening is above the distance from the limit value.

2. Method according to claim 1,
**characterized in that** the spraying device is moved for distributing the spraying liquid, in particular by means of a tractor and/or a self-propulsion unit, and/or the distribution being controlled and/or monitored by an operator.

3. Method according to claim 1 or 2,
**characterized in that** lower limit values are also predetermined as limits, at least within which the spraying device can be operated in a safe operating state.

4. Method according to any of the preceding claims,
**characterized in that** the at least one action is adapted to the anticipated reaching of the limits of the at least one operating parameter.

5. Method according to at least one of the preceding claims,
**characterized in that** at least one message to the operator or driver of the spraying device and/or the tractor connected thereto is set as a further action.

6. Method according to claim 5,
**characterized in that** in the message, the reaching of the distance to the limit and/or the expected reaching of the permissible limit of the at least one operating parameter is announced.

7. Method according to at least one of the preceding claims,
**characterized in that** as a further action, an intervention in the operation of the tractor and/or of the self-propulsion unit, preferably with respect to at least one operating parameter.

8. Method according to at least one of the preceding claims,
**characterized in that** the spraying device is operated outside the permissible limits of the operating parameters, at least in terms of time, in particular in order to adhere to specifications on the distribution of the spraying liquid.

9. Method according to at least one of the preceding claims,
**characterized in that** the adaptation of the control and/or regulation of the operation is carried out based on measured values and/or map data.

10. Method according to at least one of the preceding claims,
**characterized in that** an adaptation of the operating parameters is undertaken in advance in the direction of travel.

11. Method according to at least one of the preceding claims,
**characterized in that** at least one operating parameter is suitable for characterizing at least one of the following parameters: a pump power or a driving speed or an agitation pressure or a metering quantity.

12. Computer-based control for a spraying device, configured to implement and carry out the method according to any of the preceding claims, **characterized in that** at least one action is triggered as a function of reaching a predefined distance to at least one predetermined limit of at least one operating parameter.

13. Control according to claim 12,
**characterized in that** the operation of the tractor of the spraying device and/or the operation of the self-propulsion unit of the spraying device can be influenced and/or controlled as a further action, **and/or in that** a message to the operator and/or driver can be set as a further action.

14. Spraying device comprising a control according to claim 11 or 12, wherein the spraying device has a supply of spraying liquid and at least one distributing device for the spraying liquid, the current operating parameters of the spraying device being detected with corresponding measuring devices, and limits of the operating parameters, in particular distribution parameters, of the spraying device being predefined, the operation of the spraying device and/or the operation of the tractor of the spraying device and/or the operation of the self-propulsion unit of the spraying device being controllable by the control, **characterized in that** a control is provided via at least one action when a predefined distance from a limit of the at least one operating parameter is reached, the control being configured to carry out, as at least one action, a temporary adaptation of the control and/or regulation of the operation of the spraying device to the at least one limiting operating parameter by means of direct intervention in the operation of the spraying device, a change of the pump speed being carried out at a predefined distance of the operating parameter degree of opening of the quantity control valve from its upper limit, the distance of the degree of opening from the limit value being set between 20% and 1%, and the pump speed being reduced when the degree of opening is less than the distance, and the pump speed being increased when the degree of opening is greater than the distance.

15. Spraying device according to claim 14,
**characterized in that** a message to the operator and/or driver can be set as a further action.

16. Spraying device according to claim 14,
**characterized in that** a change of at least one of the operating parameters, in particular a distribution rate, a pump capacity, a driving speed, an agitator operation, a metering quantity or the like, is provided as the further action.

## Revendications

1. Procédé permettant l'épandage de liquide de pulvérisation comportant au moins un appareil de pulvérisation, des limites admissibles pour au moins un paramètre de fonctionnement de l'appareil de pulvérisation étant prédéterminées et au moins une action étant déclenchée lorsqu'une distance prédéfinie par rapport à une limite prédéterminée d'au moins un paramètre de fonctionnement est atteinte par l'au moins un paramètre de fonctionnement ;
**caractérisé en ce qu'**au moins un ajustement temporaire de la commande et/ou de la régulation du fonctionnement de l'appareil de pulvérisation est effectué au niveau de l'au moins un paramètre de fonctionnement limite en tant qu'au moins une action par intervention directe dans le fonctionnement de l'appareil de pulvérisation, une modification de la vitesse de rotation de pompe étant réalisée selon une distance prédéfinie d'un degré d'ouverture du paramètre de fonctionnement de la soupape de régulation de quantité par rapport à sa limite supérieure, la distance du degré d'ouverture par rapport à la valeur limite étant comprise entre 20 % et 1 % et la vitesse de rotation de pompe étant réduite si le degré d'ouverture est inférieur à la distance par rapport à la valeur limite et la vitesse de rotation de pompe étant augmentée si le degré d'ouverture est supérieur à la distance par rapport à la valeur limite.

2. Procédé selon la revendication 1,
**caractérisé en ce que** l'appareil de pulvérisation est déplacé pour l'épandage du liquide de pulvérisation, en particulier au moyen d'un tracteur et/ou d'un véhicule automoteur, et/ou l'épandage étant commandé et/ou surveillé par un opérateur.

3. Procédé selon la revendication 1 ou 2,
**caractérisé en ce que** des valeurs limites inférieures sont également prédéterminées en tant que limites, l'appareil de pulvérisation peut fonctionner dans un état de fonctionnement sûr au moins à l'intérieur desdites limites.

4. Procédé selon l'une des revendications précédentes,
**caractérisé en ce que** l'au moins une action est adaptée à l'atteinte probable des limites de l'au moins un paramètre de fonctionnement.

5. Procédé selon au moins l'une des revendications précédentes,
**caractérisé en ce qu'**au moins un message est envoyé à l'opérateur ou au conducteur de l'appareil de pulvérisation et/ou du tracteur associé à celui-ci en tant qu'autre action.

6. Procédé selon la revendication 5,
**caractérisé en ce que** l'atteinte de la distance par rapport à la limite et/ou l'atteinte probable de la limite admissible de l'au moins un paramètre de fonctionnement sont annoncées dans le message.

7. Procédé selon au moins l'une des revendications précédentes,
**caractérisé en ce qu'en** tant qu'autre action, une intervention dans le fonctionnement du tracteur et/ou du véhicule automoteur de l'appareil de pulvérisation, de préférence en ce qui concerne au moins un paramètre de fonctionnement.

8. Procédé selon au moins l'une des revendications précédentes,
**caractérisé en ce que** l'appareil de pulvérisation fonctionne au moins temporairement en dehors des limites admissibles des paramètres de fonctionnement, en particulier pour respecter des exigences concernant l'épandage du liquide de pulvérisation.

9. Procédé selon au moins l'une des revendications précédentes,
**caractérisé en ce que** l'ajustement de la commande et/ou de la régulation du fonctionnement est effectué sur la base de valeurs de mesure et/ou de données cartographiques.

10. Procédé selon au moins l'une des revendications précédentes,
**caractérisé en ce qu'**un ajustement des paramètres de fonctionnement est réalisé de manière proactive dans le sens de circulation.

11. Procédé selon au moins l'une des revendications précédentes,
**caractérisé en ce qu'**au moins un paramètre de fonctionnement est adapté pour caractériser au moins l'un des paramètres suivants : une puissance de pompage ou une vitesse de déplacement ou une pression d'agitation ou une quantité de dosage.

12. Commande basée sur l'informatique pour un appareil de pulvérisation, configurée pour mettre en œuvre et réaliser le procédé selon l'une des revendications précédentes, **caractérisée en ce qu'**au moins une action est déclenchée en fonction de l'atteinte d'une distance prédéfinie par rapport à au moins une limite prédéterminée d'au moins un paramètre de fonctionnement.

13. Commande selon la revendication 12,
**caractérisée en ce que** le fonctionnement du tracteur de l'appareil de pulvérisation et/ou le fonctionnement du véhicule automoteur de l'appareil de pulvérisation peuvent être influencés et/ou commandés en tant qu'autre action, **et/ou en ce qu'**un message peut être envoyé à l'opérateur et/ou au conducteur en tant qu'autre action.

14. Appareil de pulvérisation comportant une commande selon la revendication 11 ou 12, dans lequel l'appareil de pulvérisation présente une réserve de liquide de pulvérisation et au moins un dispositif d'épandage pour le liquide de pulvérisation, les paramètres de fonctionnement actuels de l'appareil de pulvérisation étant enregistrés avec des appareils de mesure correspondants et des limites des paramètres de fonctionnement, en particulier de paramètres d'épandage, de l'appareil de pulvérisation étant prédéfinies, le fonctionnement de l'appareil de pulvérisation et/ou le fonctionnement du tracteur de l'appareil de pulvérisation et/ou le fonctionnement du véhicule automoteur de l'appareil de pulvérisation pouvant être commandés par la commande, **caractérisé en ce qu'**une commande est prévue par l'intermédiaire d'au moins une action lorsqu'une distance prédéfinie par rapport à une limite de l'au moins un paramètre de fonctionnement est atteinte, la commande étant configurée pour réaliser au moins un ajustement temporaire de la commande et/ou de la régulation du fonctionnement de l'appareil de pulvérisation au niveau de l'au moins un paramètre de fonctionnement limite en tant qu'au moins une action par intervention directe dans le fonctionnement de l'appareil de pulvérisation, une modification de la vitesse de rotation de pompe étant réalisée selon une distance prédéfinie d'un degré d'ouverture du paramètre de fonctionnement de la soupape de régulation de quantité par rapport à sa limite supérieure, la distance du degré d'ouverture par rapport à la valeur limite étant comprise entre 20 % et 1 % et la vitesse de rotation de pompe étant réduite si le degré d'ouverture est inférieur à la distance et la vitesse de rotation de pompe étant augmentée si le degré d'ouverture est supérieur à la distance.

15. Appareil de pulvérisation selon la revendication 14,
**caractérisé en ce qu'**un message peut être envoyé à l'opérateur et/ou au conducteur en tant qu'autre action.

16. Appareil de pulvérisation selon la revendication 14,
**caractérisé en ce qu'**une modification d'au moins l'un des paramètres de fonctionnement, en particulier d'un débit d'épandage, d'une puissance de pompe, d'une vitesse de déplacement, d'un fonctionnement d'un agitateur, d'une quantité de dosage ou d'un paramètre similaire, est prévue en tant qu'autre action.
